# EUROPÄISCHE PATENTSCHRIFT

(11) **EP 1 752 632 B1**
(45) Veröffentlichungstag und Bekanntmachung des Hinweises auf die Patenterteilung: **14.10.2009**
(21) Anmeldenummer: 06016555.2
(22) Anmeldetag: 08.08.2006
(51) Int. Cl.: F01N 3/025

(54) **Vorrichtung und Verfahren zur Reinigung von Abgasen**
Exhaust gas purification device and corresponding method
Dispositif de purification de gaz d'échappement et méthode correspondante

(30) Priorität: 09.08.2005 DE 102005037639
(43) Veröffentlichungstag der Anmeldung: 14.02.2007
(73) Patentinhaber: Friedrich Boysen GmbH & Co. KG, 72213 Altensteig (DE)
(72) Erfinder: Wellner, Friedrich, 86684 Holzheim (DE); Stockinger, Karl, 72224 Ebhausen-Rotfelden (DE); Hoffmann, Stefan, 72250 Freudenstadt (DE)
(74) Vertreter: Manitz, Finsterwald & Partner GbR

(56) Entgegenhaltungen:
- WO-A-02/43840
- WO-A-20/04113791
- DE-A1- 3 219 947
- DE-A1- 3 818 158
- DE-A1- 3 939 958
- GB-A- 2 357 047

## Beschreibung

Die Erfindung betrifft eine Vorrichtung zur Reinigung der Abgase einer Brennkraftmaschine, insbesondere eines Dieselmotors, mit einem Partikelfilter und einer Einrichtung zur Regenerierung des Partikelfilters, die einen Brenner aufweist, der eine Einspritzeinrichtung zur Einspritzung eines Brennstoffes, insbesondere Kraftstoffes, insbesondere in eine in Strömungsrichtung der Abgase gesehen vor dem Partikelfilter angeordnete Ausbrennstrecke und eine Zündeinrichtung zur Zündung des Brennstoffes umfasst, wobei der Brenner aus einem Speichereinspritzsystem für die Brennkraftmaschine wie Common-Rail mit Brennstoff versorgt wird, sowie ein entsprechendes Verfahren. Eine derartige Vorrichtung und ein derartiges Verfahren sind aus der DE 39 39 958 A1 bekannt.

DE 32 19 947 A1 betrifft eine Vorrichtung zur Reinigung der Abgase einer Brennkraftmaschine mit einem Russfilter und einer Einrichtung zur Regenerierung des Russfilters, die einen Brenner aufweist, der eine Einspritzeinrichtung zur Einspritzung eines Brennstoffes und eine Zündeinrichtung zur Zündung des Brennstoffes umfasst. WO 2004/ 113791 A1 beschreibt einen Brenner mit einer Einspritzeinrichtung zur Einspritzung eines Brennstoffes.

Partikelfilter in Abgasanlagen von Dieselmotoren dienen zur Filterung von Rußpartikeln aus den Abgasen und damit zur Verringerung der Rußemission. Mit zunehmender Betriebsdauer der Dieselmotoren erhöht sich der in den Partikelfiltern angesammelte Rußgehalt jedoch kontinuierlich, d.h. die Partikelfilter werden beladen, so dass die Partikelfilter verstopfen und der Abgasgegendruck ansteigt.

Um ein Verstopfen zu vermeiden, werden die Partikelfilter in regelmäßigen Abständen oder kontinuierlich regeneriert. Dazu werden die in den Partikelfiltern angesammelten Rußpartikel bei hohen Temperaturen verbrannt. Hierfür werden die durch die Partikelfilter geleiteten Abgase oder die Partikelfilter selbst entsprechend erhitzt, um die für die Oxidation der Rußpartikel notwendigen Temperaturen bereitzustellen.

Zur Verbrennung der Rußpartikel ist es beispielsweise bekannt, die Partikelfilter oder Teile hiervon mittels einer elektrischen Heizeinrichtung aufzuheizen. Darüber hinaus ist es bekannt, die Partikelfilter mit einer katalytischen Beschichtung zu versehen. Weiterhin kann die zum Abbrennen der abgelagerten Rußpartikel notwendige Temperatur durch Verbrennung von Wasserstoff oder Kraftstoff unter Erzeugung einer Flamme erreicht werden.

Eine kontrollierte Rußzündung ist mit den vorstehend genannten Systemen nur ungenügend möglich. Insbesondere können bei Verbrennung mit einer Flamme Temperaturen erreicht werden, die bei bestimmten Filtermaterialien zu einer thermischen Zerstörung des Partikelfilters führen können.

Der Erfindung liegt die Aufgabe zugrunde, die eingangs genannte Vorrichtung hinsichtlich ihrer Funktionalität zu verbessern.

Erfindungsgemäß wird diese Aufgabe für eine Vorrichtung durch die Merkmale des unabhängigen Anspruchs 1 gelöst.

Für ein Verfahren wird diese Aufgabe durch die Merkmale des unabhängigen Anspruchs 16 gelöst.

Der Brenner wird aus einem Speichereinspritzsystem für die Brennkraftmaschine wie Common-Rail, insbesondere aus dem permanent unter hohem Druck stehenden Hochdruckspeicher bzw. der gemeinsamen Hochdruckleitung des Speichereinspritzsystems, mit Brennstoff versorgt. Somit kann das für den Betrieb der Brennkraftmaschine ohnehin vorgesehene Einspritzsystem gleichzeitig auch zur Regenerierung des Partikelfilters verwendet werden, so dass für die erfindungsgemäße Vorrichtung lediglich ein Minimum an zusätzlichen Teilen erforderlich ist.

Um Rückkopplungen auf das Einspritzsystem bei der Brennstoffentnahme für den Brenner zu vermeiden, ist dem Brenner ein separater, zusätzlich zu dem Druckspeicher des Speichereinspritzsystems vorgesehener Druckspeicher vorgeschaltet, der aus dem Speichereinspritzsystem für die Brennkraftmaschine mit Brennstoff versorgt wird.

Vorzugsweise sind zur Regenerierung des Partikelfilters einzelne Einspritzpulse vorgesehen, d.h. der Brennstoff wird in zeitlich aufeinanderfolgenden Pulsen in die Ausbrennstrecke, insbesondere eine Abgasleitung, eingespritzt. Dort kann der Brennstoff dann durch die Zündeinrichtung gezündet werden, so dass die Temperatur der Abgase, des Partikelfilters und/oder der Abgasleitung auf einen Wert steigt, bei dem in den Abgasen enthaltene Rußpartikel und dergleichen durch Verbrennung effektiv beseitigt werden.

Durch die gepulste Einspritzung kann der Regenerierungsvorgang, insbesondere die dabei auftretende Temperatur, auf die sich die Abgase, der Partikelfilter und/oder die Abgasleitung bei der Verbrennung des Brennstoffes erhitzen, besonders gut kontrolliert werden. Dies ergibt sich insbesondere daraus, dass bei gepulstem Betrieb gegenüber nicht gepulstem Betrieb zusätzliche Freiheitsgrade in Form von zusätzlichen Parametern, wie beispielsweise der Anzahl der Einspritzpulse pro Zeiteinheit, vorhanden sind, die variiert werden können, so dass der durchzuführende Regenerierungsvorgang an die jeweils aktuell vorliegenden Betriebsparameter der Abgasanlage und/oder der Brennkraftmaschine angepasst werden kann.

Beispielsweise kann bei einer hohen Sauerstoffkonzentration in den Abgasen eine andere Einspritzrate eingestellt werden als bei einer niedrigen Sauerstoffkonzentration. Darüber hinaus kann durch die gepulste Einspritzung ein Überhitzen des Partikelfilters, das zu einer Degradation der Filterwirkung des Partikelfilters oder sogar zur Zerstörung des Partikelfilters führen könnte, vermieden werden. Außerdem kann durch den gepulsten Betrieb Brennstoff eingespart werden.

Weitere vorteilhafte Ausführungsformen der Erfindung sind in den Unteransprüchen, der Beschreibung sowie der Zeichnung angegeben.

Nach einer bevorzugten Ausführungsform der Erfindung ist die Einrichtung zur Regenerierung des Partikelfilters derart ausgelegt, dass die Einspritzung unter Hochdruck erfolgt. Hierdurch kann erreicht werden, dass der Brennstoff in kurzer Zeit fein zerstäubt in die Ausbrennstrecke geleitet werden kann, so dass eine effiziente, emissionsarme und/oder sparsame Verbrennung des Brennstoffes gewährleistet werden kann. Vorzugsweise ist für die Hochdruck-Einspritzung eine Hochdruckdüse vorgesehen.

Bevorzugt ist ein Ventil zur Einstellung und/oder Regelung des Einspritzdrucks der Einspritzeinrichtung und/oder der Brennstoffmenge, beispielsweise in einem separaten Druckspeicher für den Brenner, insbesondere ein Druck- und/oder Mengenregelventil, vorgesehen. Insbesondere kann ein betriebsparameter- bzw. betriebspunktabhängiger Druck in dem zur Versorgung des Brenners ausgebildeten Brennstoffkreislauf, der neben dem Primärbrennstoffkreislauf für die Brennkraftmaschine einen Sekundärbrennstoffkreislauf darstellt, eingestellt werden. Das Ventil kann dazu dienen, Rückkopplungen auf ein Einspritzsystem für die Brenn kraftmaschine zu vermeiden. Alternativ oder zusätzlich zu einem Druck- und/oder Mengenregelventil kann auch ein Druckbegrenzungsventil vorgesehen sein.

Das Ventil kann durch ein elektronisches Motor-Steuergerät steuerbar sein. Das Motor-Steuergerät kann außerdem zur Steuerung des Betriebs der Brennkraftmaschine und des Einspritzsystems der Brennkraftmaschine ausgelegt sein. Insbesondere kann es sich bei dem durch das Motor-Steuergerät gesteuerten Einspritzsystem um ein Speichereinspritzsystem handeln.

Ferner kann erfindungsgemäß wenigstens ein Sensor zur Ermittlung eines Betriebsparameters der Abgasanlage, insbesondere ein Druck-, Sauerstoff- und/oder Temperatursensor, vorgesehen sein. Dies ermöglicht, dass ein Steuergerät für die Einrichtung zur Regenerierung des Partikelfilters, insbesondere ein Motor-Steuergerät, über alle zur Steuerung der Einrichtung zur Regenerierung des Partikelfilters notwendigen Betriebsparameter informiert werden kann. Der Sensor kann dem Partikelfilter vor- oder nachgeschaltet sein. Der Brenner ist bevorzugt zwischen einem vorgeschalteten Sensor oder vorgeschalteten Sensoren und dem Partikelfilter angeordnet. Sind Sensoren der gleichen Art jeweils vor und nach dem Partikelfilter angeordnet, können die Auswirkungen der Zündung des Brennstoffes auf die durch die jeweiligen Sensoren messbaren Betriebsparameter ermittelt werden.

Die Einrichtung zur Regenerierung des Partikelfilters ist bevorzugt derart ausgelegt, dass die Regenerierung von Zeit zu Zeit erfolgt. Die Regenerierung findet also nicht kontinuierlich statt, sondern insbesondere lediglich bei Bedarf. Beispielsweise kann die Regenerierung genau dann stattfinden, wenn die Beladung des Partikelfilters mit Rußpartikeln ein Maß erreicht hat, bei dem der Abgasgegendruck einen vorgegebenen Wert übersteigt.

Besonders vorteilhaft ist es, wenn die Einrichtung zur Regenerierung des Partikelfilters derart ausgelegt ist, dass der Beginn der Regenerierung von wenigstens einem Betriebsparameter der Abgasanlage abhängig ist. Bevorzugt ist der Beginn der Regenerierung aber von zumindest drei Betriebsparametern abhängig, insbesondere von dem Abgasgegendruck, dem Sauerstoffwert in den Abgasen und der Temperatur der Abgase. Insbesondere ist es von Vorteil, wenn die Regenerierung in Phasen mit relativ hohem Sauerstoffanteil im Abgas erfolgt. Beispielsweise kann die Zündung des Brennstoffes dann erfolgen, wenn die für eine erfolgreiche Zündung erforderliche Rußbeladung des Partikelfilters erreicht ist und gleichzeitig der Restsauerstoffanteil in den Abgasen über einem bestimmten Wert und die Abgastemperatur unter der Zündtemperatur von undotiertem Ruß liegt.

Es ist weiterhin bevorzugt, dass die Einrichtung zur Regenerierung des Partikelfilters derart ausgelegt ist, dass die Anzahl pro Zeiteinheit, die Gesamtzahl und/oder die Dauer der Einspritzpulse und/oder die Einspritzmenge pro Einspritzpuls in Abhängigkeit von wenigstens einem Betriebsparameter der Abgasanlage und/oder der Brennkraftmaschine variierbar ist. Hierdurch kann der Regenerierungsvorgang besonders gut an die aktuellen Betriebsverhältnisse der Brennkraftmaschine, der Abgasanlage und/oder des Partikelfilters angepasst werden. Die vorstehend genannten Einspritzpulsparameter können zusätzlich oder alternativ auch in Abhängigkeit von der Geometrie des Partikelfilters und/oder den Anströmungsverhältnissen veränderbar sein.

Zur Steuerung der Zündung des Brennstoffes kann ein mit der Zündeinrichtung verbundenes Zünd-Steuergerät vorgesehen sein. Das Zünd-Steuergerät seinerseits ist bevorzugt durch ein Motor-Steuergerät steuerbar, das insbesondere auch den Betrieb der Brennkraftmaschine steuert. Grundsätzlich kann das Zünd-Steuergerät auch in ein Motor-Steuergerät integriert sein.

Des Weiteren kann eine Sonde zur Überwachung der Zündung des Brennstoffes, insbesondere zur Flammerkennung, vorgesehen sein. Es kann somit unmittelbar erkannt werden, ob der Zündvorgang auch tatsächlich zu einer Zündung geführt hat.

Um eine Einlagerung von unverbranntem Kraftstoff, insbesondere Aerosolen, in das Filtermedium zu verhindern, kann es vorgesehen sein, dass der Partikelfilter zumindest teilweise eine katalytische Beschichtung aufweist. Alternativ oder zusätzlich kann in der Ausbrennzone ein katalytisch wirksamer Flammhalter vorgesehen sein.

Gemäß einer vorteilhaften Ausführungsform der Erfindung wird der Brennstoff nach Zündung der Zündeinrichtung eingespritzt. Sobald sich an der Zündeinrichtung ein Lichtbogen ausgebildet hat, kann die gepulste Einspritzung des Brennstoffes beginnen. Damit kann ein Eintrag von unverbranntem Brennstoff in den Partikelfilter vermieden werden.

Nach einer bestimmten Einspritzdauer oder nach Einspritzung einer bestimmten Zahl von Pulsen kann der erreichte Regenerierungsgrad geprüft werden. Vorzugsweise wird bei ungenügender Regenerierung des Partikelfilters die gepulste Einspritzung des Brennstoffes wiederholt, um die gewünschte Regenerierung zu erreichen.

Insbesondere wird die gepulste Einspritzung des Brennstoffes wiederholt, falls am abgasaustrittsseitigen Ende des Partikelfilters keine signifikante Erhöhung der Abgastemperatur gemessen wird. Wenn keine Erhöhung der Abgastemperatur gemessen wurde, kann davon ausgegangen werden, dass die Regenerierung des Partikelfilters noch nicht ausreicht.

Bei der Wiederholung der Einspritzung kann es dann von Vorteil sein, die Anzahl pro Zeiteinheit, die Gesamtzahl und/oder die Dauer der Einspritzpulse und/oder die Einspritzmenge pro Einspritzpuls gegenüber der vorausgegangenen Einspritzung zu verändern, um die nachfolgende Russverbrennung an den geänderten Regenerierungsgrad anzupassen oder erfolgreicher zu gestalten.

Vorzugsweise wird der Sauerstoffanteil im Abgas beeinflusst, gesteuert, geregelt, erhöht und/oder reduziert.

Es ist bevorzugt, dass die Sauerstoffzufuhr für die Brennkraftmaschine geregelt, insbesondere reduziert, wird. Hierdurch können der Sauerstoffanteil im Abgas und damit die Temperatur bei der Verbrennung der Rußpartikel des Partikelfilters beeinflusst werden. Dies ist beispielsweise über einen Luftmassenregler der Brennkraftmaschine möglich. Bei einer Reduktion der Sauerstoffzufuhr kann der Sauerstoffanteil im Abgas und damit die Verbrennungstemperatur und/oder die Abbrenngeschwindigkeit reduziert werden. Dadurch kann ein gegebenenfalls örtlich kritischer Wärmeeintrag, der zu einer Beschädigung oder Zerstörung des Partikelfilters führen kann, verhindert werden.

Insbesondere um einen höheren Sauerstoffanteil im Abgas, d.h. einen höheren Luftdurchsatz, zu erreichen, können ein oder mehrere Zylinder der Brennkraftmaschine abgeschaltet und/oder die Einspritzmenge für einen oder mehrere Zylinder reduziert werden. Dadurch steht für die Verbrennung im Partikelfilter mehr Sauerstoff zur Verfügung, wodurch Zündproblemen begegnet werden kann. Die Abschaltung oder Reduzierung erfolgt bevorzugt nur kurzzeitig und/oder bei niedriger Last.

Weiterhin kann bei aufgeladener Brennkraftmaschine, insbesondere mit Turbolader, insbesondere zur Erhöhung oder Reduzierung des Sauerstoffanteils im Abgas, der Ladedruck beeinflusst, insbesondere angehoben oder abgesenkt, werden. Bei Sauerstoffmangel kann von dem Turbolader Luft abgezweigt und über einen Bypass, insbesondere ein Abgasrückführventil, dem Abgas zugeführt werden.
Die Erfindung wird im Folgenden beispielhaft unter Bezugnahme auf die Zeichnung beschrieben. Es zeigen:
- Fig. 1: eine erfindungsgemäße Vorrichtung zur Reinigung der Abgase einer Brennkraftmaschine mit einem Partikelfilter und einer Einrichtung zur Regenerierung des Partikelfilters, und
- Fig. 2: eine Einrichtung zur Regenerierung eines Partikelfilters in einer gegenüber Fig. 1 vergrößerten Darstellung.

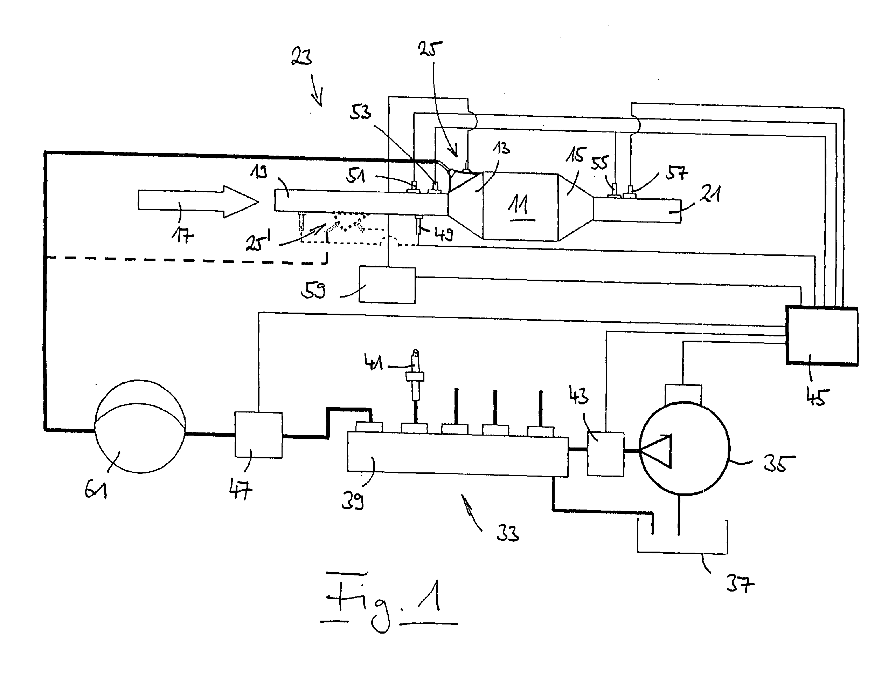

Die erfindungsgemäße Vorrichtung umfasst gemäß Fig. 1 einen Partikelfilter 11, der zur Filterung von Rußpartikeln aus den Abgasen eines nicht dargestellten Dieselmotors ausgelegt ist. Das Gehäuse des Partikelfilters 11 weist einen abgaseintrittsseitigen Raum 13, der an eine in Strömungsrichtung 17 der Abgase gesehen vor dem Partikelfilter 11 angeordnete Abgasleitung 19 angeschlossen ist, und einen abgasaustrittsseitigen Raum 15 auf, der an eine in Strömungsrichtung 17 der Abgase gesehen nach dem Partikelfilter 11 angeordnete Abgasleitung 21 angeschlossen ist.

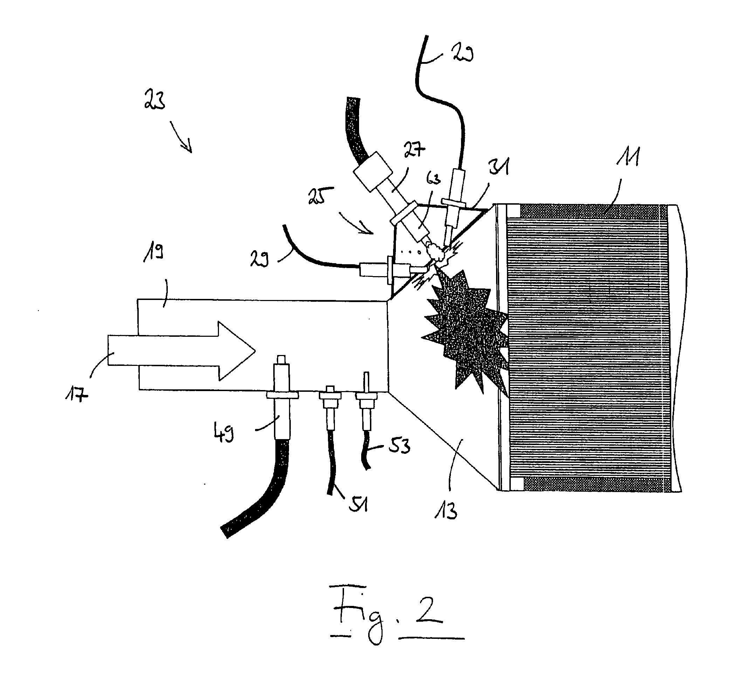

Darüber hinaus umfasst die erfindungsgemäße Vorrichtung eine Einrichtung 23 zur Regenerierung des Partikelfilters 11. Die Einrichtung 23 zur Regenerierung des Partikelfilters 11 weist einen Brenner 25 zur Erhitzung der Abgase und des Partikelfilters 11 und somit zur Zündung der in dem Partikelfilter 11 vorhandenen Rußpartikel auf. Der Brenner 25 ist hierfür an dem abgaseintrittsseitigen Ende des Partikelfilters 11 montiert und umfasst eine Einspritzeinrichtung 27 (Fig. 2) zur Einspritzung von Dieselkraftstoff in den Raum 13 vor dem Partikelfilter 11. Darüber hinaus ist eine Zündeinrichtung 29 (Fig. 2) vorgesehen, die zur Zündung des eingespritzten Dieselkraftstoffs ausgelegt ist. Die eine Hochdruckdüse 63 auf weisende Einspritzeinrichtung 27 und die zwei Elektroden aufweisende Zündeinrichtung 29 sind in einem Gehäuse 31 des Brenners 25 untergebracht. Als zweite Elektrode kann auch das Gehäuse des Partikelfilters 11 verwendet werden.

Alternativ kann der Brenner auch an der in Strömungsrichtung 17 der Abgase gesehen vor dem Partikelfilter 11 angeordneten Abgasleitung 19 befestigt sein, wie in Fig. 1 durch einen gestrichelt dargestellten Brenner 25' angedeutet ist. Der Dieselkraftstoff wird dann in die vorgeschaltete Abgasleitung 19 eingespritzt, die als Ausbrennstecke wirkt.

Ferner ist in Fig. 1 ein Common-Rail-System 33 für den Dieselmotor dargestellt. Das Common-Rail-System 33 umfasst eine Hochdruckpumpe 35, die unter Druckerzeugung einem Druckspeicher 39, der permanent unter Hochdruck steht, beispielsweise von ca. 1600 bis 2000 bar, Dieselkraftstoff aus einem Treibstofftank 37 zuführt. Während des Betriebs des Dieselmotors wird der in dem Druckspeicher 39 befindliche Dieselkraftstoff durch Einspritzdüsen 41, von denen in Fig. 1 lediglich eine gezeigt ist, in den Brennraum der Zylinder des Dieselmotors gepresst. Zur Regelung des Systemdrucks des Common-Rail-Systems 33 ist ein Druck- und/oder Mengenregelventil 43 vorgesehen.

Die Hochdruckpumpe 35, das Druck- und/oder Mengenregelventil 43 und die Einspritzdüsen 41 werden durch ein Motor-Steuergerät 45 gesteuert, wie in Fig. 1 für die Hochdruckpumpe 35 und das Druck- und/oder Mengenregelventil 43 durch entsprechende Verbindungslinien verdeutlicht ist.

Neben den Einspritzdüsen 41 ist auch der Brenner 25 der Einrichtung 23 zur Regenerierung des Partikelfilters 11 aus dem Common-Rail-System 33 mit Dieselkraftstoff versorgbar. Da der Druckspeicher 39 des Common-Rail-Systems 33 unter Hochdruck steht, erfolgt auch die Dieselkraftstoff-Einspritzung in den Brenner 25 unter Hochdruck. Um Rückwirkungen auf das Common-Rail-System 33 bei der Entnahme von Dieselkraftstoff für den Brenner 25 zu vermeiden, ist zwischen dem Brenner 25 und dem Common-Rail-System 33 ein separater, zusätzlich zu dem Druckspeicher 39 des Common-Rail-Systems 33 vorgesehener Druckspeicher 61 angeordnet, in dem ein Druck von ca. 200 bis 1600 bar eingestellt sein kann.

Zwischen dem dem Brenner 25 zugeordneten Druckspeicher 61 und dem Common-Rail-System 33 des Dieselmotors ist ein ebenfalls durch das Motor-Steuergerät 45 steuerbares Druck- und/oder Mengenregelventil 47 angeordnet, um den dem Brenner 25 zugeordneten Druckspeicher 61 von dem Common-Rail-System 33 zu entkoppeln.

In der dem Partikelfilter 11 vorgeschalteten Abgasleitung 19 sind ein Sauerstoffsensor 49, ein Temperatursensor 51 und ein Drucksensor 53 angeordnet, um den Sauerstoffanteil in den Abgasen, den Abgasdruck und die Temperatur der Abgase zu messen. Zusätzlich sind ein Drucksensor 55 und ein Temperatursensor 57 in der dem Partikelfilter 11 nachgeschalteten Abgasleitung 21 angeordnet. Sämtliche Sensoren 49 bis 57 sind mit der Motor-Steuereinheit 45 verbunden, um die jeweiligen Messwerte an diese zu melden.

Schließlich ist ein Zünd-Steuergerät 59 vorgesehen, das über die Zündeinrichtung 29 die Zündung des Dieselkraftstoffs in dem Brenner 25 steuert. Das Zünd-Steuergerät 59 wird ebenfalls von der Motor-Steuereinheit 45 gesteuert.

Nachfolgend wird das erfindungsgemäße Verfahren zur Regenerierung des Partikelfilters 11 unter Bezugnahme auf die Figuren beschrieben.

Während des Betriebs des Dieselmotors werden die Abgase ständig von den Sensoren 49 bis 57 auf ihren Druck, ihre Temperatur und ihren Sauerstoffanteil hin überwacht. Die jeweils gemessenen Werte werden kontinuierlich an die Motor-Steuereinheit 45 übermittelt. Solange der durch den Drucksensor 53 ermittelte Abgasgegendruck einen festgelegten Druckwert nicht überschreitet, wird keine Regenerierung des Partikelfilters 11 durchgeführt, da die Beladung des Partikelfilters 11 ein festgelegtes Maß noch nicht überschritten hat.

Wenn der durch den Drucksensor 53 detektierte Abgasgegendruck jedoch den festgelegten Druckwert überschreitet, soll eine Regenerierung des Partikelfilters 11 erfolgen. Die Regenerierung wird dann in einer Phase des Betriebs des Dieselmotors durchgeführt, in der die durch den Temperatursensor 54 detektierte Temperatur einen festgelegten Temperaturwert nicht überschreitet und gleichzeitig ein relativ hoher Sauerstoffanteil in den Abgasen, der einen festgelegten Sauerstoffwert überschreitet, vorliegt. Eine derartige Phase kann beispielsweise bei niedrigen Lastzuständen oder im Schubbetrieb vorliegen.

Wurde das Vorliegen einer derartigen Phase festgestellt, steuert die Motor-Steuereinheit 45 die Zünd-Steuereinheit 59 derart, dass diese eine Zündung der Zündeinrichtung 29 veranlasst. Sobald sich zwischen den Elektroden der Zündeinrichtung 29 ein Lichtbogen ausgebildet hat, steuert die Motor-Steuereinheit 45 die Einspritzeinrichtung 27 derart, dass eine gepulste Einspritzung von Dieselkraftstoff in den Brenner 25 der Einrichtung 23 zur Regenerierung des Partikelfilters 11 beginnt.

Abhängig von der Beladung des Partikelfilters 11, der gemessenen Temperatur und dem gemessenen Sauerstoffanteil wird die Anzahl pro Zeiteinheit, die Gesamtzahl und die Dauer der Einspritzpulse und die Einspritzmenge pro Einspritzpuls variiert, um die für den gemessenen Betriebspunkt optimale Regenerierung zu gewährleisten. Die Einspritzmenge und Brenndauer werden dabei über den Druck und die Ventil-Öffnungszeiten der Einspritzeinrichtung 27 bestimmt.

Mittels des Temperatursensors 57 wird am abgasaustrittsseitigen Ende des Partikelfilters die Temperatur der Abgase überwacht. Wird nach einer Regenerierungsphase keine signifikante Erhöhung der Abgastemperatur gemessen, wird die gepulste Einspritzung des Brennstoffes ggf. unter Variation der Einspritzpulsparameter wiederholt.

Nach erfolgreicher Regenerierung des Partikelfilters 11, beispielsweise wenn der angelagerte Dieselkraftstoffruß zu mehr als 90% verbrannt wurde, wird die Einspritzung beendet, und es beginnt die Beladung des Partikelfilters 11 mit Rußpartikeln von vorne. Sobald die Beladung des Partikelfilters 11 dann das festgelegte Maß wieder überschreitet, wird der Regenerierungsvorgang erneut gestartet. Die Regenerierung erfolgt somit nicht kontinuierlich, sondern lediglich bei Bedarf.

### Bezugszeichenliste

- 11: Partikelfilter
- 13: abgäseintrittsseitiger Raum
- 15: abgasaustrittsseitiger Raum
- 17: Strömungsrichtung
- 19: vorgeschaltete Abgasleitung
- 21: nachgeschaltete Abgasleitung
- 23: Einrichtung zur Regenerierung des Partikelfilters
- 25, 25': Brenner
- 27: Einspritzeinrichtung
- 29: Zündeinrichtung
- 31: Gehäuse
- 33: Common-Rail-System
- 35: Hochdruckpumpe
- 37: Treibstofftank
- 39: Druckspeicher
- 41: Einspritzdüse
- 43: Druck- und/oder Mengenregelventil
- 45: Motor-Steuergerät
- 47: Druck- und/oder Mengenregelventil
- 49: Sauerstoffsensor
- 51: Temperatursensor
- 53: Drucksensor
- 55: Drucksensor
- 57: Temperatursensor
- 59: Zünd-Steuergerät
- 61: Druckspeicher
- 63: Hochdruckdüse

## Patentansprüche

1. Vorrichtung zur Reinigung der Abgase einer Brennkraftmaschine, insbesondere eines Dieselmotors, mit einem Partikelfilter (11) und einer Einrichtung (23) zur Regenerierung des Partikelfilters (11), die einen Brenner (25) aufweist, der eine Einspritzeinrichtung (27) zur Einspritzung eines Brennstoffes, insbesondere Kraftstoffes, insbesondere in eine in Strömungsrichtung (17) der Abgase gesehen vor dem Partikelfilter (11) angeordnete Ausbrennstrecke (19), und eine Zündeinrichtung (29) zur Zündung des Brennstoffes umfasst, wobei der Brenner (25) aus einem Speichereinspritzsystem (33) für die Brennkraftmaschine wie Common-Rail mit Brennstoff versorgt wird,
**dadurch gekennzeichnet,**
**dass** dem Brenner (25) ein separater Druckspeicher (61) vorgeschaltet ist, der aus dem Speichereinspritzsystem (33) für die Brennkraftmaschine mit Brennstoff versorgt wird.

2. Vorrichtung nach Anspruch 1,
**dadurch gekennzeichnet,**
**dass** der Brenner (25) zur gepulsten Einspritzung des Brennstoffes ausgebildet ist.

3. Vorrichtung nach Anspruch 1 oder 2,
**dadurch gekennzeichnet,**
**dass** die Einrichtung (23) zur Regenerierung des Partikelfilters (11) derart ausgelegt ist, dass die Einspritzung unter Hochdruck erfolgt.

4. Vorrichtung nach Anspruch 3,
**dadurch gekennzeichnet ,**
**dass** zur Einspritzung eine Hochdruckdüse (63) vorgesehen ist.

5. Vorrichtung nach einem der vorhergehenden Ansprüche,
**dadurch gekennzeichnet ,**
**dass** ein Ventil (47) zur Einstellung und/oder Regelung des Einspritzdrucks der Einspritzeinrichtung (27) und/oder der Brennstoffmenge, insbesondere ein Druck- und/oder Mengenregelventil, vorgesehen ist.

6. Vorrichtung nach Anspruch 5,
**dadurch gekennzeichnet ,**
**dass** das Ventil (47) durch ein elektronisches Motor-Steuergerät (45) (45), das insbesondere auch zur Steuerung eines Speichereinspritzsystems (33) für die Brennkraftmaschine ausgelegt ist, steuerbar ist.

7. Vorrichtung nach einem der vorhergehenden Ansprüche,
**dadurch gekennzeichnet ,**
**dass** wenigstens ein dem Partikelfilter (11) vor- oder nachgeschalteter Sensor (49, 51, 53, 55, 57) zur Ermittlung eines Betriebsparameters der Abgasanlage, insbesondere ein Druck-, Sauerstoff- und/oder Temperatursensor, vorgesehen ist.

8. Vorrichtung nach einem der vorhergehenden Ansprüche,
**dadurch gekennzeichnet ,**
**dass** die Einrichtung (23) zur Regenerierung des Partikelfilters (11) derart ausgelegt ist, dass die Regenerierung von Zeit zu Zeit erfolgt.

9. Vorrichtung nach einem der vorhergehenden Ansprüche,
**dadurch gekennzeichnet ,**
**dass** die Einrichtung (23) zur Regenerierung des Partikelfilters (11) derart ausgelegt ist, dass der Beginn der Regenerierung von wenigstens einem Betriebsparameter der Abgasanlage abhängig ist.

10. Vorrichtung nach Anspruch 9,
**dadurch gekennzeichnet ,**
**dass** die Einrichtung (23) zur Regenerierung des Partikelfilters (11) derart ausgelegt ist, dass der Beginn der Regenerierung von dem Abgasdruck, dem Sauerstoffwert in den Abgasen und der Temperatur der Abgase abhängig ist.

11. Vorrichtung nach einem der Ansprüche 2 bis 10,
**dadurch gekennzeichnet ,**
**dass** die Einrichtung (23) zur Regenerierung des Partikelfilters (11) derart ausgelegt ist, dass die Anzahl pro Zeiteinheit, die Gesamtzahl und/oder die Dauer der Einspritzpulse und/oder die Einspritzmenge pro Einspritzpuls in Abhängigkeit von wenigstens einem Betriebsparameter der Abgasanlage und/oder der Brennkraftmaschine variierbar ist.

12. Vorrichtung nach einem der vorhergehenden Ansprüche,
**dadurch gekennzeichnet ,**
**dass** ein mit der Zündeinrichtung (29) verbundenes, insbesondere von einem Motor-Steuergerät (45) gesteuertes Zünd-Steuergerät (59) zur Steuerung der Zündung des Brennstoffes vorgesehen ist.

13. Vorrichtung nach einem der vorhergehenden Ansprüche,
**dadurch gekennzeichnet ,**
**dass** eine Sonde zur Überwachung der Zündung des Brennstoffes vorgesehen ist.

14. Vorrichtung nach einem der vorhergehenden Ansprüche,
**dadurch gekennzeichnet ,**
**dass** der Partikelfilter (11) zumindest teilweise eine katalytische Beschichtung aufweist.

15. Vorrichtung nach einem der vorhergehenden Ansprüche,
**dadurch gekennzeichnet ,**
**dass** in der Ausbrennzone ein katalytisch wirksamer Flammhalter vorgesehen ist.

16. Verfahren zur Reinigung der Abgase einer Brennkraftmaschine, insbesondere eines Dieselmotors, bei dem mittels eines Brenners (25) einer Einrichtung (23) zur Regenerierung eines Partikelfilters (11) ein Brennstoff, insbesondere Kraftstoff, insbesondere in eine in Strömungsrichtung (17) der Abgase gesehen vor dem Partikelfilter (11) angeordnete Ausbrennstrecke (19), eingespritzt und der Brennstoff gezündet wird, wobei der Brenner (25) aus dem Speicher eines Speichereinspritzsystems (33) für die Brennkraftmaschine wie Common-Rail mit Brennstoff versorgt wird,
**dadurch gekennzeichnet** ,
der Brenner (25) unter Zwischenschaltung eines separaten Druckspeichers (61) aus dem Speichereinspritzsystem (33) für die Brennkraftmaschine mit Brennstoff versorgt wird.

17. Verfahren nach Anspruch 16,
**dadurch gekennzeichnet ,**
**dass** der Brennstoff gepulst eingespritzt wird.

18. Verfahren nach Anspruch 16 oder 17,
**dadurch gekennzeichnet ,**
**dass** der Brennstoff unter Hochdruck eingespritzt wird.

19. Verfahren nach einem der Ansprüche 16 bis 18,
**dadurch gekennzeichnet ,**
**dass** der Einspritzdruck der Einspritzeinrichtung (27) und/oder die Brennstoffmenge mittels eines Ventils (47), insbesondere eines Druck- und/oder Mengenregelventils, eingestellt und/oder geregelt wird.

20. Verfahren nach Anspruch 19,
**dadurch gekennzeichnet ,**
**dass** das Ventil (47) durch ein elektronisches Motor-Steuergerät (45), das insbesondere auch ein Speichereinspritzsystem (33) für die Brennkraftmaschine steuert, gesteuert wird.

21. Verfahren nach einem der Ansprüche 16 bis 20,
**dadurch gekennzeichnet ,**
**dass** wenigstens ein Betriebsparameter der Abgasanlage, insbesondere der Abgasdruck, der Sauerstoffwert in den Abgasen und/oder die Temperatur der Abgase, ermittelt wird.

22. Verfahren nach einem der Ansprüche 16 bis 21,
**dadurch gekennzeichnet ,**
**dass** der Partikelfilter (11) diskontinuierlich regeneriert wird.

23. Verfahren nach einem der Ansprüche 16 bis 22,
**dadurch gekennzeichnet ,**
**dass** die Regenerierung in Abhängigkeit von wenigstens einem Betriebsparameter der Abgasanlage beginnt.

24. Verfahren nach Anspruch 23,
**dadurch gekennzeichnet**
**dass** die Regenerierung in Abhängigkeit von dem Abgasgegendruck, dem Sauerstoffwert in den Abgasen und der Temperatur der Abgase beginnt.

25. Verfahren nach Anspruch 23 oder 24,
**dadurch gekennzeichnet,**
**dass** die Regenerierung in Phasen mit relativ hohem Sauerstoffanteil im Abgas erfolgt.

26. Verfahren nach einem der Ansprüche 17 bis 25,
**dadurch gekennzeichnet,**
**dass** die Anzahl pro Zeiteinheit, die Gesamtzahl und/oder die Dauer der Einspritzpulse und/oder der Einspritzmenge pro Einspritzpuls in Abhängigkeit von wenigstens einem Betriebsparameter der Abgasanlage und/oder der Brennkraftmaschine verändert wird.

27. Verfahren nach einem der Ansprüche 16 bis 26,
**dadurch gekennzeichnet ,**
**dass** die Zündung des Brennstoffs von einem Zünd-Steuergerät (59) gesteuert wird, das insbesondere von einem Motor-Steuergerät (45) gesteuert wird.

28. Verfahren nach einem der Ansprüche 16 bis 27,
**dadurch gekennzeichnet ,**
**dass** die Zündung des Brennstoffs mittels einer Sonde überwacht wird.

29. Verfahren nach einem der Ansprüche 16 bis 28,
**dadurch gekennzeichnet ,**
**dass** der Brennstoff nach Zündung der Zündeinrichtung (29) eingespritzt wird.

30. Verfahren nach einem der Ansprüche 16 bis 29,
**dadurch gekennzeichnet ,**
**dass** nach einer bestimmten Einspritzdauer oder nach Einspritzung einer bestimmten Zahl von Pulsen der erreichte Regenerierungsgrad geprüft wird.

31. Verfahren nach Anspruch 30,
**dadurch gekennzeichnet ,**
**dass** bei ungenügender Regenerierung des Partikelfilters (11) die gepulste Einspritzung des Brennstoffes wiederholt wird.

32. Verfahren nach Anspruch 30 oder 31,
**dadurch gekennzeichnet ,**
**dass** die gepulste Einspritzung des Brennstoffes wiederholt wird, falls am abgasaustrittsseitigen Ende (15) des Partikelfilters (11) keine signifikante Erhöhung der Abgastemperatur gemessen wird.

33. Verfahren nach einem der Ansprüche 16 bis 32,
**dadurch gekennzeichnet ,**
**dass** der Sauerstoffanteil im Abgas beeinflusst, gesteuert, geregelt, erhöht und/oder reduziert wird.

34. Verfahren nach einem der Ansprüche 16 bis 33,
**dadurch gekennzeichnet ,**
**dass** die Sauerstoffzufuhr für die Brennkraftmaschine geregelt, insbesondere reduziert, wird.

35. Verfahren nach einem der Ansprüche 16 bis 34,
**dadurch gekennzeichnet ,**
**dass** ein oder mehrere Zylinder der Brennkraftmaschine abgeschaltet werden und/oder die Einspritzmenge für einen oder mehrere Zylinder reduziert wird.

36. Verfahren nach einem der Ansprüche 16 bis 35,
**dadurch gekennzeichnet ,**
**dass** bei aufgeladener Brennkraftmaschine, insbesondere mit Turbolader, der Ladedruck beeinflusst, insbesondere angehoben oder abgesenkt, wird.

37. Verfahren nach Anspruch 36,
**dadurch gekennzeichnet ,**
**dass** von dem Turbolader Luft abgezweigt und über einen Bypass, insbesondere ein Abgasrückführventil, dem Abgas zugeführt wird.

## Claims

1. An apparatus for the purification of the exhaust gases of a combustion engine, in particular of a diesel engine, having a particulate filter (11) and a device (23) for the regeneration of the particulate filter (11) which has a burner (25) which includes an injection device (27) for the injection of a combustible, in particular of a fuel, in particular into a burnout path (19) arranged before the particulate filter (11) viewed in the flow direction (17) of the exhaust gases, and an ignition device (29) for the ignition of the combustible, wherein the burner (25) is supplied with combustible from a reservoir injection system (33) for the combustion engine such as a common rail,
**characterized in that**
a separate pressure reservoir (61) is disposed before the burner (25) and is supplied with combustible from the reservoir injection system (33) for the combustion engine.

2. An apparatus in accordance with claim 1, **characterized in that** the burner (25) is made for the pulsed injection of the combustible.

3. An apparatus in accordance with claim 1 or 2, **characterized in that** the device (23) for the regeneration of the particulate filter (11) is configured such that the injection takes place under high pressure.

4. An apparatus in accordance with claim 3, **characterized in that** a high pressure nozzle (63) is provided for the injection.

5. An apparatus in accordance with any one of the preceding claims, **characterized in that** a valve (47) is provided for the setting and/or regulation of the injection pressure of the injection device (27) and/or of the combustible amount, in particular a pressure valve and/or an amount regulation valve.

6. An apparatus in accordance with claim 5, **characterized in that** the valve (47) is controllable by an electronic motor control device (45) which is in particular also configured for the control of a reservoir injection system (33) for the combustion engine.

7. An apparatus in accordance with any one of the preceding claims, **characterized in that** at least one sensor (49, 51, 53, 55, 57) disposed upstream or downstream of the particulate filter (11) is provided for the determination of an operating parameter of the exhaust gas system, in particular a pressure, oxygen and/or temperature sensor.

8. An apparatus in accordance with any one of the preceding claims, **characterized in that** the device (23) for the regeneration of the particulate filter (11) is configured such that the regeneration takes place from time to time.

9. An apparatus in accordance with any one of the preceding claims, **characterized in that** the device (23) for the regeneration of the particulate filter (11) is configured such that the start of the regeneration is dependent on at least one operating parameter of the exhaust gas system.

10. An apparatus in accordance with claim 9, **characterized in that** the device (23) for the regeneration of the particular filter (11) is configured such that the start of the regeneration is dependent on the exhaust gas pressure, on the oxygen value in the exhaust gases and on the temperature of the exhaust gases.

11. An apparatus in accordance with any one of the claims 2 to 10, **characterized in that** the device (23) for the regeneration of the particulate filter (11) is configured such that the number of injection pulses per time unit, the total number of injection pulses and/or the injection amount per injection pulse is/are variable in dependence on at least one operating parameter of the exhaust gas system and/or of the combustion engine.

12. An apparatus in accordance with any one of the preceding claims, **characterized in that** an ignition control device (59) connected to the ignition device (29) and in particular controlled by a motor control device (45) is provided for the control of the ignition of the combustible.

13. An apparatus in accordance with any one of the preceding claims, **characterized in that** a probe is provided for the monitoring of the ignition of the combustible.

14. An apparatus in accordance with any one of the preceding claims, **characterized in that** the particulate filter (11) at least partly has a catalytic coating.

15. An apparatus in accordance with any one of the preceding claims, **characterized in that** a catalytically effective flame holder is provided in the burnout zone.

16. A method for the for the purification of the exhaust gases of a combustion engine, in particular of a diesel engine, wherein a combustible, in particular a fuel, is injected by means of a burner (25) of a device (23) for the regeneration of a particular filter (11), in particular into a burnout path (19) arranged before the particulate filter (11) viewed in the flow direction (17) of the exhaust gases and the combustible is ignited, wherein the burner (25) is supplied with combustible from the reservoir of a reservoir injection system (33) for the combustion engine such as a common rail,
**characterized in that**
the burner (25) is supplied with combustible from the reservoir injection system (33) for the combustion engine while interposing a separate pressure reservoir (61).

17. A method in accordance with claim 16, **characterized in that** the combustible is injected pulse-wise.

18. A method in accordance with claim 16 or claim 17, **characterized in that** the combustible is injected under high pressure.

19. A method in accordance with any one of the claims 16 to 18, **characterized in that** the injection pressure of the injection device (27) and/or the combustible amount is set and/or regulated by means of a valve (47), in particular of a pressure valve and/or an amount regulation valve.

20. A method in accordance with claim 19, **characterized in that** the valve (47) is controlled by an electronic motor control device (45) which in particular also controls a reservoir injection system (33) for the combustion engine.

21. A method in accordance with any one of the claims 16 to 20, **characterized in that** at least one operating parameter of the exhaust gas system, in particular the exhaust gas pressure, the oxygen value in the exhaust gases and/or the temperature of the exhaust gases, is determined.

22. A method in accordance with any one of the claims 16 to 21, **characterized in that** the particulate filter (11) is regenerated discontinuously.

23. A method in accordance with any one of the claims 16 to 22, **characterized in that** the regeneration starts in dependence on at least one operating parameter of the exhaust gas system.

24. A method in accordance with claim 23, **characterized in that** the regeneration starts in dependence on the exhaust gas pressure, on the oxygen value in the exhaust gases and on the temperature of the exhaust gases.

25. A method in accordance with claim 23 or claim 24, **characterized in that** the regeneration takes place in phases with a relatively high oxygen portion in the exhaust gas.

26. A method in accordance with any one of the claims 17 to 25, **characterized in that** the number of injection pulses per time unit, the total number of injection pulses and/or the duration of the injection pulses and/or of the injection amount per injection pulse is/are changed in dependence on at least one operating parameter of the exhaust gas system and/or of the combustion engine.

27. A method in accordance with any one of the claims 16 to 26, **characterized in that** the ignition of the combustible is controlled by an ignition control device (59) which is in particular controlled by a motor control device (45).

28. A method in accordance with any one of the claims 16 to 27, **characterized in that** the ignition of the combustible is monitored by means of a probe.

29. A method in accordance with any one of the claims 16 to 28, **characterized in that** the combustible is injected after ignition of the ignition device (29).

30. A method in accordance with any one of the claims 16 to 29, **characterized in that** the degree of regeneration achieved is checked after a specific injection duration or after injection of a specific number of pulses.

31. A method in accordance with claim 30, **characterized in that** the pulsed injection of the combustible is repeated on an insufficient regeneration of the particulate filter (11).

32. A method in accordance with claim 30 or claim 31, **characterized in that** the pulsed injection of the combustible is repeated if no significant increase of the exhaust gas temperature is measured at the end (15) of the particulate filter (11) at the exhaust gas outlet side.

33. A method in accordance with any one of the claims 16 to 32, **characterized in that** the oxygen portion in the exhaust gas is influenced, controlled, regulated, increased and/or reduced.

34. A method in accordance with any one of the claims 16 to 33, **characterized in that** the oxygen supply for the combustion engine is regulated, in particular reduced.

35. A method in accordance with any one of the claims 16 to 34, **characterized in that** one or more cylinders of the combustion engine is/are deactivated and/or the injection amount for one or more cylinders is reduced.

36. A method in accordance with any one of the claims 16 to 35, **characterized in that** the charge pressure is influenced, in particular raised or lowered, with a charged combustion engine, in particular with a turbocharger.

37. A method in accordance with claim 36, **characterized in that** air is branched off from the turbocharger and is supplied to the exhaust gas via a bypass, in particular via an exhaust gas return valve.

## Revendications

1. Appareil pour purifier les gaz d'échappement d'un moteur à combustion interne, en particulier d'un moteur diesel, comprenant un filtre à particules (11) et un système (23) pour régénérer le filtre à particules (11), ce système comprenant un brûleur (25) qui comprend un dispositif d'injection (27) pour injecter un combustible, en particulier un carburant, en particulier sur un trajet de combustion (19) agencé avant le filtre à particules (11), considéré dans la direction d'écoulement (17) des gaz d'échappement, et un dispositif d'allumage (29) pour allumer le combustible, dans lequel le brûleur (25) est alimenté en combustible à partir d'un système d'injection à accumulation (33) pour le moteur à combustion interne, comme un système dit "Common Rail",
**caractérisé en ce que** le brûleur (25) est précédé d'un accumulateur de pression (61) séparé qui est alimenté en combustible à partir du système d'injection à accumulation (33) pour le moteur à combustion interne.

2. Appareil selon la revendication 1,
**caractérisé en ce que** le brûleur (25) est réalisé en vue d'une injection pulsée du combustible.

3. Appareil selon la revendication 1 ou 2,
**caractérisé en ce que** le système (23) pour régénérer le filtre à particules (11) est conçu de telle manière que l'injection a lieu sous haute pression.

4. Appareil selon la revendication 3,
**caractérisé en ce qu'**il est prévu une buse à haute pression (63) pour l'injection.

5. Appareil selon l'une des revendications précédentes,
**caractérisé en ce qu'**il est prévu une valve (47) pour le réglage et/ou la régulation de la pression d'injection du dispositif d'injection (27) et/ou du débit quantitatif de combustible, en particulier une valve de régulation de pression et/ou de débit.

6. Appareil selon la revendication 5,
**caractérisé en ce que** la valve (47) est susceptible d'être commandée par un appareil de commande motorisé électronique (45), qui est conçu en particulier également pour la commande d'un système d'injection à accumulation (33) pour le moteur à combustion interne.

7. Appareil selon l'une des revendications précédentes,
**caractérisé en ce qu'**il est prévu au moins un capteur (49, 51, 53, 55, 57) branché avant ou après le filtre à particules (11) pour déterminer un paramètre de fonctionnement de l'installation de gaz d'échappement, en particulier un capteur de pression, d'oxygène et/ou de température.

8. Appareil selon l'une des revendications précédentes,
**caractérisé en ce que** le système (23) pour régénérer le filtre à particules (11) est conçu de telle manière que la régénération a lieu de temps en temps.

9. Appareil selon l'une des revendications précédentes,
**caractérisé en ce que** le système (23) pour régénérer le filtre à particules (11) est conçu de telle manière que le commencement de la régénération dépend d'au moins un paramètre de fonctionnement de l'installation de gaz d'échappement.

10. Appareil selon la revendication 9,
**caractérisé en ce que** le système (23) pour régénérer le filtre à particules (11) est conçu de telle manière que le commencement de la régénération dépend de la pression des gaz d'échappement, de la concentration en oxygène dans les gaz d'échappement et de la température des gaz d'échappement.

11. Appareil selon l'une des revendications 2 à 10,
**caractérisé en ce que** le système (23) pour régénérer le filtre à particules (11) est conçu de telle manière que le nombre des impulsions d'injection par unité de temps, que le nombre total et/ou la durée des impulsions d'injection et/ou que la quantité injectée par impulsion d'injection est variable en fonction d'au moins un paramètre de fonctionnement de l'installation de gaz d'échappement et/ou du moteur à combustion interne.

12. Appareil selon l'une des revendications précédentes,
**caractérisé en ce qu'**il est prévu un appareil de commande d'allumage (59) relié au dispositif d'allumage (29) et en particulier commandé par un appareil de commande motorisé (45), pour la commande de l'allumage du combustible.

13. Appareil selon l'une des revendications précédentes,
**caractérisé en ce qu'**il est prévu une sonde pour la surveillance de l'allumage du combustible.

14. Appareil selon l'une des revendications précédentes,
**caractérisé en ce que** le filtre à particules (11) comprend au moins partiellement un revêtement catalytique.

15. Appareil selon l'une des revendications précédentes,
**caractérisé en ce qu'**il est prévu un porte-flamme à action catalytique dans la zone de combustion.

16. Procédé pour la purification des gaz d'échappement d'un moteur à combustion interne, en particulier d'un moteur diesel, dans lequel un combustible, en particulier un carburant, est injecté au moyen d'un brûleur (25) d'un système (23) pour régénérer un filtre à particules (11), en particulier sur un trajet de combustion (19) agencé avant le filtre à particules (11) considéré dans la direction d'écoulement (17) des gaz d'échappement, et le combustible est allumé, dans lequel le brûleur (25) est alimenté en combustible à partir de l'accumulateur d'un système d'injection à accumulation (33) pour le moteur à combustion interne, comme une installation dite "Common-Rail",
**caractérisé en ce que** le brûleur (25) est alimenté en combustible avec interposition d'un accumulateur de pression (61) séparé à partir du système d'injection à accumulation (33) pour le moteur à combustion interne.

17. Procédé selon la revendication 16,
**caractérisé en ce que** le combustible est injecté de manière pulsée.

18. Procédé selon la revendication 16 ou 17,
**caractérisé en ce que** le combustible est injecté sous haute pression.

19. Procédé selon l'une des revendications 16 à 18,
**caractérisé en ce que** la pression d'injection du dispositif d'injection (27) et/ou la quantité de combustible est réglée et/ou régulée au moyen d'une valve (47), en particulier une valve de régulation de pression et/ou une valve de régulation de débit quantitatif.

20. Procédé selon la revendication 19,
**caractérisé en ce que** la valve (47) est commandée par un appareil de commande motorisé électronique (45), qui commande en particulier également un système d'injection à accumulation (33) pour le moteur à combustion interne.

21. Procédé selon l'une des revendications 16 à 20,
**caractérisé en ce que** l'on détermine au moins un paramètre de fonctionnement de l'installation de gaz d'échappement, en particulier la pression des gaz d'échappement, la concentration en oxygène dans les gaz d'échappement et/ou la température des gaz d'échappement.

22. Procédé selon l'une des revendications 16 à 21,
**caractérisé en ce que** le filtre à particules (11) est régénéré de façon discontinue.

23. Procédé selon l'une des revendications 16 à 22,
**caractérisé en ce que** la régénération commence en fonction d'au moins un paramètre de fonctionnement de l'installation de gaz d'échappement.

24. Procédé selon la revendication 23,
**caractérisé en ce que** la régénération commence en fonction de la contrepression des gaz d'échappement, de la concentration en oxygène dans les gaz d'échappement et de la température des gaz d'échappement.

25. Procédé selon la revendication 23 ou 24,
**caractérisé en ce que** la régénération a lieu pendant des phases avec une part d'oxygène relativement élevée dans les gaz d'échappement.

26. Procédé selon l'une des revendications 17 à 25,
**caractérisé en ce que** l'on fait varier le nombre d'impulsions d'injection par unité de temps, le nombre total et/ou la durée des impulsions d'injection, et/ou la quantité injectée et par impulsion d'injection, en fonction d'au moins un paramètre de fonctionnement de l'installation de gaz d'échappement et/ou du moteur à combustion interne.

27. Procédé selon l'une des revendications 16 à 26,
**caractérisé en ce que** l'allumage du combustible est commandé par un appareil de commande d'allumage (59), lequel est en particulier commandé par un appareil de commande motorisé (25).

28. Procédé selon l'une des revendications 16 à 27,
**caractérisé en ce que** l'allumage du combustible est surveillé au moyen d'une sonde.

29. Procédé selon l'une des revendications 16 à 28,
**caractérisé en ce que** le combustible est injecté après allumage du dispositif d'allumage (29).

30. Procédé selon l'une des revendications 16 à 29,
**caractérisé en ce que** l'on vérifie le degré de régénération atteint après une durée d'injection déterminée ou après injection d'un nombre déterminé d'impulsions.

31. Procédé selon la revendication 30,
**caractérisé en ce que** l'on répète l'injection pulsée de combustible lorsque la régénération du filtre à particules (11) est insuffisante.

32. Procédé selon la revendication 30 ou 31,
**caractérisé en ce que** l'on répète l'injection pulsée du combustible dans le cas où l'on ne mesure pas d'augmentation significative de la température des gaz d'échappement à l'extrémité (15) du filtre à particules (11) du côté sortie des gaz d'échappement.

33. Procédé selon l'une des revendications 16 à 32,
**caractérisé en ce que** la part d'oxygène dans les gaz d'échappement est influencée, commandée, régulée, augmentée et/ou réduite.

34. Procédé selon l'une des revendications 16 à 33,
**caractérisé en ce que** l'apport d'oxygène pour le moteur à combustion interne est régulé, en particulier réduit.

35. Procédé selon l'une des revendications 16 à 34,
**caractérisé en ce qu'**un ou plusieurs cylindres du moteur à combustion interne sont mis hors service et/ou **en ce que** l'on réduit la quantité injectée pour un ou plusieurs cylindres.

36. Procédé selon l'une des revendications 16 à 35,
**caractérisé en ce que**, dans le cas d'un moteur à combustion interne suralimenté, en particulier avec turbocompresseur, la pression d'alimentation est influencée, en particulier augmentée ou réduite.

37. Procédé selon la revendication 36,
**caractérisé en ce que** de l'air est dérivé depuis le turbocompresseur et amené aux gaz d'échappement via un by-pass, en particulier via une valve de recirculation de gaz d'échappement.
